# EUROPEAN PATENT SPECIFICATION

(11) **EP 3 587 495 B1**
(45) Date of publication and mention of the grant of the patent: **31.03.2021**
(21) Application number: 18181025.0
(22) Date of filing: 29.06.2018
(51) Int. Cl.: C08L 69/00

(54) **COPOLYCARBONATE COMPOSITIONS INCLUDING 2-HYDROCARBYL-3-(DIHYDROXYFLUORESCEINYL)PHTHALIMIDINE UNIT, AND ARTICLES DERIVED THEREFROM**
COPOLYCARBONATZUSAMMENSETZUNGEN MIT EINER 2-HYDROCARBYL-3-(DIHYDROXYFLUORESCEINYL)-PHTHALIMIDIN-EINHEIT UND DARAUS ABGELEITETE ARTIKEL
COMPOSITIONS DE COPOLYCARBONATE COMPRENANT UNE UNITÉ 2-HYDROCARBYL-3-(DIHYDROXYFLUORESCÉINE) PHTHALIMIDINE ET LEURS ARTICLES DÉRIVÉS

(43) Date of publication of application: 01.01.2020
(73) Proprietor: SHPP Global Technologies B.V., 4612 PX Bergen op Zoom (NL)
(72) Inventor: KENCHAIAH, Lohith, 562125 Bangalore, Karnataka (IN); MAHOOD, James Alan, Mt. Vernon, IN 47620 (US); SUGUR, Vijayakumar Venkatesh, 562125 Bangalore, Karnataka (IN); VENGU, Gurunath Pozhal, 562125 Bangalore, Karnataka (IN); RAMALINGAM, Hariharan, 562125 Bangalore, Karnataka (IN); PAL, Jaykisor, 562125 Bangalore, Karnataka (IN); AGRAWAL, Mukesh, 562125 Bangalore, Karnataka (IN)
(74) Representative: Balder IP Law, S.L.

(56) References cited:
- WO-A1-2008/109464
- WO-A1-2017/203496
- MACIEJ ADAMCZYK ET AL: "Synthesis of novel spirolactams by reaction of fluorescein methyl ester with amines", TETRAHEDRON LETTERS, vol. 41, no. 6, 1 February 2000 (2000-02-01), pages 807-809, XP055541073, AMSTERDAM, NL ISSN: 0040-4039, DOI: 10.1016/S0040-4039(99)02197-8

## Description

### BACKGROUND

This disclosure relates to polycarbonate compositions, and more particularly compositions including copolycarbonates having structural units derived from 2-hydrocarbyl-3-(dihydroxyfluoresceinyl)phthalimidines, and articles derived therefrom.
Polycarbonates are useful in the manufacture of articles and components for a wide range of applications, from automotive parts to electronic appliances. Because of their broad use, particularly in lenses, optical films, and healthcare products requiring high heat sterilization, it is desirable to provide polycarbonates with high heat performance combined with good optical properties, particularly after processing and after exposure to real life conditions such as prolonged exposure to high temperatures. For instance, WO 2017/203496 discloses high heat copolycarbonate compositions having enhanced optical properties.

Some known "high heat" copolycarbonates can have high glass transition temperatures of 150°C or higher. But such polycarbonates are typically more yellow after processing and have lower transmission values. There accordingly remains a need for polycarbonate and copolycarbonate compositions having an improved balance of high heat performance, optical properties, and mechanical properties.

### BRIEF DESCRIPTION

In an embodiment, a thermoplastic composition comprises a copolycarbonate comprising bisphenol A carbonate units and second carbonate units of formula (1a) 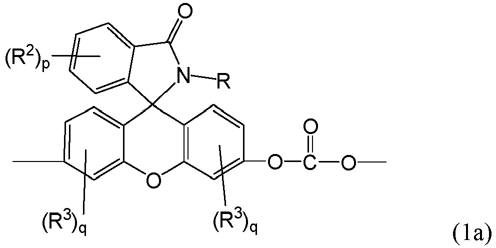 wherein R is a C₁₋₂₅ hydrocarbyl, preferably a C₁₋₆ alkyl, a phenyl, or a phenyl substituted with up to five C₁₋₆ alkyl groups, more preferably a C₁₋₃ alkyl or a phenyl; each occurrence of R² and R³ is independently a hydrogen, a halogen, or a C₁₋₂₅ hydrocarbyl, preferably a hydrogen, a halogen, or a C₁₋₆ alkyl, more preferably a hydrogen or a C₁₋₃ alkyl; and p and q are each independently 0-4, preferably 0 or 1, more preferably 0; and optionally a bisphenol A homopolycarbonate.

In another embodiment, an article manufactured from the composition is provided, wherein the article is a molded article, a thermoformed article, an extruded film, an extruded sheet, one or more layers of a multi-layer article, a three dimensional printed part, a substrate for a coated article, or a substrate for a metallized article.

The above described and other features are exemplified by the following figures and detailed description.

### DETAILED DESCRIPTION

The present disclosure is generally directed to polymers and copolymer comprising a 2-hydrocarbyl-3-(dihydroxyfluoresceinyl)phthalimidine repeating unit and the corresponding articles derived therefrom.

2-hydrocarbyl-3-(dihydroxyfluoresceinyl)phthalimidines can be used in the manufacture of polycarbonates and other polymers. The copolymers including the 2-hydrocarbyl-3-(dihydroxyfluoresceinyl)phthalimidines can have improved properties, such as high heat stability, good color stability, and a reduced yellowness index (YI). The 2-hydrocarbyl-3-(dihydroxyfluoresceinyl)phthalimidine precursor monomers can be prepared with high purity and can provide a high product purity as compared to previous monomers such as 2-hydrocarbyl-3,3-bis(4-hydroxyaryl)phthalimidines.

Provided herein is a thermoplastic composition including a copolycarbonate comprising bisphenol A carbonate repeating units and second carbonate repeating units derived from a 2-hydrocarbyl-3-(dihydroxyfluoresceinyl)phthalimidine bisphenol monomer. As used herein, the second carbonate repeating units are phthalimidine carbonate units. The term "repeating unit", as used herein, is synonymous with "unit".

"Polycarbonate" as used herein means a homopolymer or copolymer having repeating structural carbonate units of formula (1) 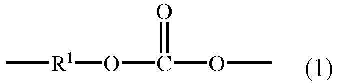 wherein at least 60 percent of the total number of R¹ groups contain aromatic moieties and the balance thereof are aliphatic, alicyclic, or aromatic. In an embodiment, each R¹ is a C₆₋₃₀ aromatic group, that is, contains at least one aromatic moiety. R¹ can be derived from an aromatic dihydroxy compound of the formula HO-R¹-OH, in particular of formula (2)

HO-A¹-Y¹-A²-OH (2)

wherein each of A¹ and A² is a monocyclic divalent aromatic group and Y¹ is a single bond or a bridging group having one or more atoms that separate A¹ from A². In an embodiment, one atom separates A¹ from A². Specifically, each R¹ can be derived from a bisphenol of formula (3) 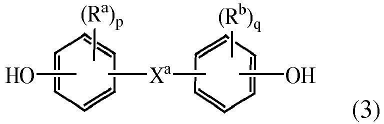 wherein R^{a} and R^{b} are each independently a halogen, C₁₋₁₂ alkoxy, or C₁₋₁₂ alkyl, and p and q are each independently integers of 0 to 4. It will be understood that when p or q is less than 4, the valence of each carbon of the ring is filled by hydrogen. Also in formula (3), X^{a} is a bridging group connecting the two hydroxy-substituted aromatic groups, where the bridging group and the hydroxy substituent of each C₆ arylene group are disposed ortho, meta, or para (specifically para) to each other on the C₆ arylene group. In an embodiment, the bridging group X^{a} is single bond, -O-, -S-, -S(O)-, -S(O)₂-, -C(O)-, or a C₁₋₁₈ organic group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. In an embodiment, p and q is each 1, and R^{a} and R^{b} are each a C₁₋₃ alkyl group, specifically methyl, disposed meta to the hydroxy group on each arylene group.

In an embodiment, X^{a} is a C₃₋₁₈ cycloalkylidene, a C₁₋₂₅ alkylidene of formula - C(R^{c})(R^{d}) - wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl, or a group of the formula - C(=R^{e})- wherein R^{e} is a divalent C₁₋₁₂ hydrocarbon group. Groups of these types include methylene, cyclohexylmethylidene, ethylidene, neopentylidene, and isopropylidene, as well as 2-[2.2.1]-bicycloheptylidene, cyclohexylidene, 3,3-dimethyl-5-methylcyclohexylidene, cyclopentylidene, cyclododecylidene, and adamantylidene.

In another embodiment, X^{a} is a C₁₋₁₈ alkylene, a C₃₋₁₈ cycloalkylene, a fused C₆₋₁₈ cycloalkylene, or a group of the formula -J¹-G-J²- wherein J¹ and J² are the same or different C₁₋₆ alkylene and G is a C₃₋₁₂ cycloalkylidene or a C₆₋₁₆ arylene.

Other useful dihydroxy compounds of the formula HO-R¹-OH include aromatic dihydroxy compounds of formula (6) 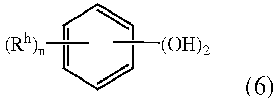 wherein each R^{h} is independently a halogen atom, C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4. The halogen is usually bromine.

Some illustrative examples of specific dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or combinations comprising at least one of the foregoing dihydroxy compounds.

Specific examples of bisphenol compounds of formula (3) include 1,1-bis(4-hydroxyphenyl) methane, 1,1-bis(4-hydroxyphenyl)ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl)propane, 1,1-bis(4-hydroxyphenyl)n-butane, 2,2-bis(4-hydroxy-2-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). Combinations comprising at least one of the foregoing dihydroxy compounds can also be used.

In the thermoplastic composition, the copolycarbonate includes a bisphenol A carbonate unit that is derived from 2,2-bis(4-hydroxyphenyl) propane (BPA) and has the formula (3a)

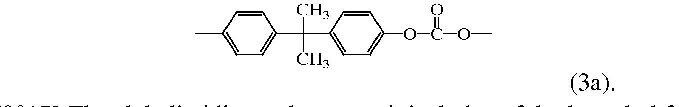

In an embodiment, the phthalimidine carbonate units are of formula (1b) 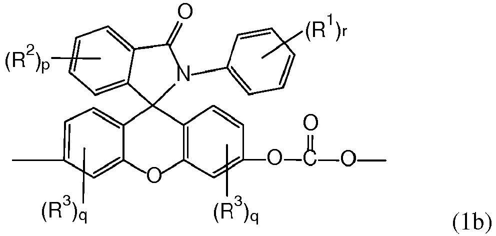 wherein each occurrence of R¹ is independently a hydrogen, a phenyl, or a C₁₋₂₅ hydrocarbyl, preferably a hydrogen, a phenyl, or a C₁₋₆ alkyl; and r is 0-5, preferably 0 or 1. Each occurrence of R² and R³ is independently a hydrogen, a halogen, or a C₁₋₆ alkyl, preferably a hydrogen or a C₁₋₃ alkyl; and q are each independently 0-4, preferably 0 or 1. In some embodiments, R¹ is a C₁₋₃ alkyl and r is 0 or 1. In some embodiments, R² and R³ are each independently a hydrogen or a C₁₋₃ alkyl, and p and q are each independently 0 or 1. In some embodiments, r is 0. In other embodiments, p is 0.

When p, q, and r are 0 in formula (1c), the phthalimidine carbonate unit is of formula (1c)

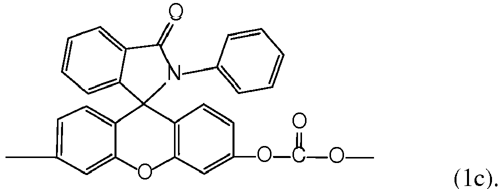

In some embodiments, the copolycarbonate includes 5-95 mole percent (mol%), of the bisphenol A carbonate units and 5-95 mol% of the phthalimidine carbonate units, preferably 25-85 mol% of the bisphenol A carbonate units and 15-75 mol% of the phthalimidine carbonate units, and more preferably 50-80 mol% of the bisphenol A carbonate units and 20-50 mol% of the phthalimidine carbonate units, each based on the total number of carbonate units in the copolycarbonate

In some embodiments, the copolycarbonate further comprises a high heat carbonate unit different from the bisphenol A carbonate unit and the phthalimidine carbonate unit. The high heat carbonate unit can have the formulas (7) to (11): 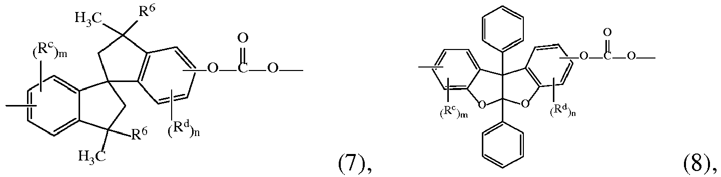 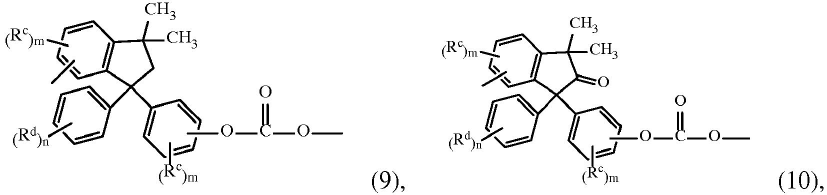 or 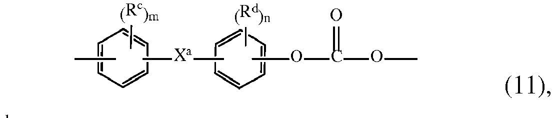 wherein R^{c} and R^{d} are each independently a C₁₋₁₂ alkyl, C₁₋₁₂ alkenyl, C₃₋₈ cycloalkyl, or C₁₋₁₂ alkoxy, each R⁶ is independently C₁₋₃ alkyl or phenyl, preferably methyl, X^{a} is a C₆₋₁₂ polycyclic aryl, C₃₋₁₈ mono- or polycycloalkylene, C₃₋₁₈ mono- or polycycloalkylidene, -(Q¹)ₓ-G-(Q²)_{y}- group wherein Q¹ and Q² are each independently a C₁₋₃ alkylene, G is a C₃₋₁₀ cycloalkylene, x is 0 or 1, and y is 1, or -C(P¹)(P²) - wherein P¹ is C₁₋₁₂ alkyl and P² is C₆₋₁₂ aryl; and m and n are each independently 0 to 4.

Exemplary high heat carbonate units include the following: 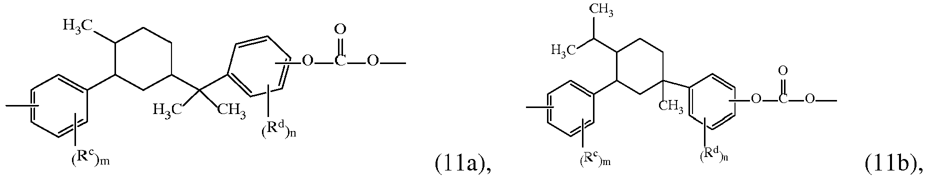 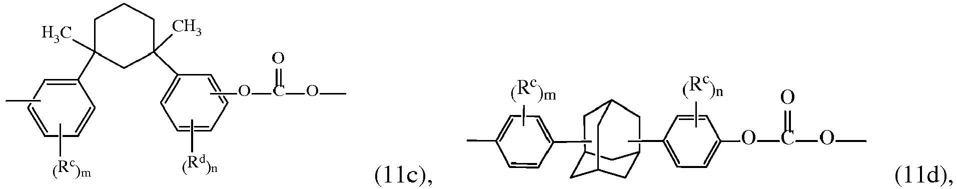 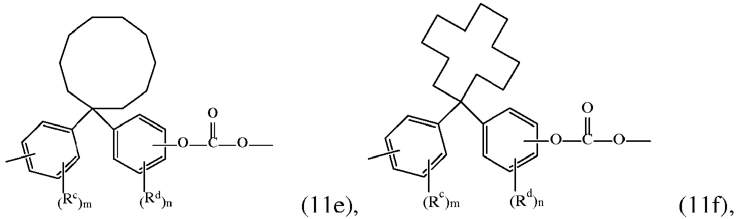 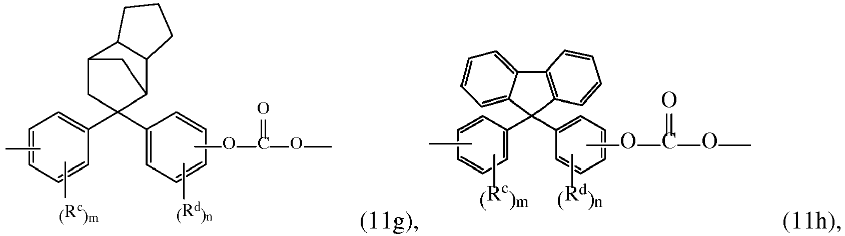 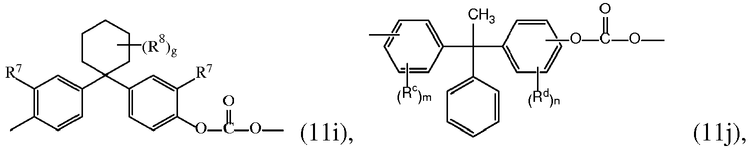 or 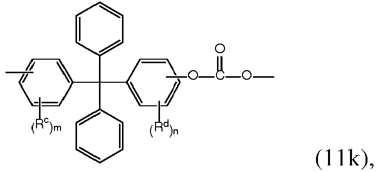 wherein R^{c} and R^{d} are each independently a C₁₋₁₂ alkyl, C₁₋₁₂ alkenyl, C₃₋₈ cycloalkyl, or C₁₋₁₂ alkoxy, each R⁷ is independently hydrogen or C₁₋₄ alkyl, each R⁸ is independently C₁₋₄ alkyl or hydrogen, g is 0 to 10, and m and n are each independently 0 to 4. Preferably, each R⁷ is independently hydrogen or methyl, each R⁸ is independently methyl or hydrogen, g is 0 to 2, and m and n are 0. In a specific embodiment the high heat carbonate units are 1,1-bis(4-hydroxyphenyl)-3,3,5-trimethyl-cyclohexane carbonate units, 1,1-bis(4-hydroxy-3-methylphenyl)cyclohexane carbonate units, or a combination thereof.

When the high heat carbonate units are present, the copolycarbonates can include 40-80 mol% of the bisphenol A carbonate units, 10-50 mol% of the phthalimidine carbonate units, and 5-50 mol% of the high heat carbonate units, preferably 50-80 mol% of the bisphenol A carbonate units, 20-50 mol% of the phthalimidine carbonate units, and 5-40 mol% of the high heat carbonate units, more preferably 50-70 mol% of the bisphenol A carbonate units, 20-40 mol% of the phthalimidine carbonate units, and 5-30 mol% of the high heat carbonate units, each based on the total number of carbonate units in the copolycarbonate.

In an embodiment, the copolycarbonates are highly random copolymers, which have less than 15 mol% or less than 10 mol% of the phthalimidine carbonate units directly coupled to another phthalimidine carbonate unit based on the total number of carbonate units in the copolycarbonates. The molar percent can be determined by nuclear magnetic resonance spectroscopy (NMR).

In some embodiments, the copolycarbonates are essentially free of certain metal ions, anions, and low molecular weight molecules (less than 150 g/mol). In an embodiment, the copolycarbonates comprise less than 2 ppm of each of triethyl amine, calcium ions, magnesium ions, potassium ions, iron ions, and chloride ions.

The copolycarbonates can have a weight average molecular weight (Mw) of 10,000 to 50,000 Daltons (Da), preferably 16,000 to 30,000 (Da), as measured by gel permeation chromatography (GPC), using a crosslinked styrene-divinylbenzene column and calibrated to bisphenol A homopolycarbonate references. GPC samples are prepared at a concentration of 1 mg per ml, and are eluted at a flow rate of 1.5 ml per minute.

The copolycarbonates can have a high glass transition temperature (T_{g}). The T_{g} of the copolycarbonates can be 150°C or greater, preferably 190°C or greater, more preferably 195°C or greater, as determined by differential scanning calorimetry (DSC) as per ASTM D3418 with a 20°C/min heating rate. For example, the T_{g} is 150 to 280°C, preferably 160 to 260°C, more preferably 170 to 230°C, even more preferably 180 to 230°C or 190 to 230°C.

The copolycarbonates can have high heat resistance. The heat deflection temperature (HDT) of the copolycarbonates can be 145 to 270°C, more preferably 155 to 260°C, even more preferably 175 to 220°C, measured flat on a 80 x 10 x 4 mm bar with a 64 mm span at 0.45 MPa according to ISO 75/Bf.

The copolycarbonates can have high Vicat softening temperature. In an embodiment, the copolycarbonates have a Vicat B120 of 150 to 275°C, preferably 160 to 255°C, even more preferably 180 to 225°C, measured according to ISO 306.

"Polycarbonates" includes homopolycarbonates (wherein each R¹ in the polymer is the same), copolymers comprising different R¹ moieties in the carbonate ("copolycarbonates"), and copolymers comprising carbonate units and other types of polymer units, such as ester units or siloxane units.

A specific type of copolymer is a poly(ester-carbonate), also known as a polyester-polycarbonate. Such copolymers further contain, in addition to recurring carbonate units of formula (1), repeating units of formula (12) 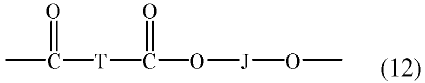 wherein J is a divalent group derived from a dihydroxy compound (including a reactive derivative thereof), and can be, for example, a C₁₋₁₀ alkylene, a C₆₋₂₀ cycloalkylene, a C₅₋₂₀ arylene, or a polyoxyalkylene in which the alkylene groups contain 2 to 6 carbon atoms, specifically 2, 3, or 4 carbon atoms; and T is a divalent group derived from a dicarboxylic acid (including a reactive derivative thereof), and can be, for example, a C₂₋₂₀ alkylene, a C₅₋₂₀ cycloalkylene, or a C₆₋₂₀ arylene. Copolyesters containing a combination of different T or J groups can be used. The polyester units can be branched or linear.

In an embodiment, J is a C₂₋₃₀ alkylene group having a straight chain, branched chain, or cyclic (including polycyclic) structure, for example ethylene, n-propylene, i-proplyene, 1,4-butylene, 1,4-cyclohexylene, or 1,4-methylenecyclohexane. In another embodiment, J is derived from a bisphenol of formula (3), e.g., bisphenol A. In another embodiment, J is derived from an aromatic dihydroxy compound of formula (6), e.g, resorcinol.

Aromatic dicarboxylic acids that can be used to prepare the polyester units include isophthalic or terephthalic acid, 1,2-di(p-carboxyphenyl)ethane, 4,4'-dicarboxydiphenyl ether, 4,4'-bisbenzoic acid, or a combination comprising at least one of the foregoing acids. Acids containing fused rings can also be present, such as in 1,4-, 1,5-, or 2,6-naphthalenedicarboxylic acids. Specific dicarboxylic acids include terephthalic acid, isophthalic acid, naphthalene dicarboxylic acid, 1,4-cyclohexane dicarboxylic acid, or a combination comprising at least one of the foregoing acids. A specific dicarboxylic acid comprises a combination of isophthalic acid and terephthalic acid wherein the weight ratio of isophthalic acid to terephthalic acid is 91:9 to 2:98.

Specific ester units include ethylene terephthalate, n-propylene terephthalate, n-butylene terephthalate, 1,4-cyclohexanedimethylene terephthalate, and ester units derived from isophthalic acid, terephthalic acid, and resorcinol (ITR)). The molar ratio of ester units to carbonate units in the copolymers can vary broadly, for example 1:99 to 99:1, specifically 10:90 to 90:10, more specifically 25:75 to 75:25, or 2:98 to 15:85, depending on the desired properties of the final composition. Specific poly(ester-carbonate)s are those including bisphenol A carbonate units and isophthalate-terephthalate-bisphenol A ester units, also commonly referred to as poly(carbonate-ester)s (PCE) poly(phthalate-carbonate)s (PPC) depending on the molar ratio of carbonate units and ester units.

The copolycarbonates can further include polysiloxane blocks that comprise repeating diorganosiloxane units as in formula (13) 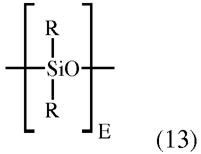 wherein each R is independently a C₁₋₁₃ monovalent organic group. For example, R can be a C₁₋₁₃ alkyl, C₁₋₁₃ alkoxy, C₂₋₁₃ alkenyl, C₂₋₁₃ alkenyloxy, C₃₋₆ cycloalkyl, C₃₋₆ cycloalkoxy, C₆₋₁₄ aryl, C₆₋₁₀ aryloxy, C₇₋₁₃ arylalkyl, C₇₋₁₃ aralkoxy, C₇₋₁₃ alkylaryl, or C₇₋₁₃ alkylaryloxy. The foregoing groups can be fully or partially halogenated with fluorine, chlorine, bromine, or iodine, or a combination thereof. In an embodiment, where a transparent poly(carbonate-siloxane) is desired, R is unsubstituted by halogen. Combinations of the foregoing R groups can be used in the same copolymer.

The value of E in formula (10) can vary widely depending on the type and relative amount of each component in the thermoplastic composition, the desired properties of the composition, and like considerations. Generally, E has an average value of 2 to 1,000, specifically 2 to 500, 2 to 200, or 2 to 125, 5 to 80, or 10 to 70. In an embodiment, E has an average value of 10 to 80 or 10 to 40, and in still another embodiment, E has an average value of 40 to 80, or 40 to 70. Where E is of a lower value, e.g., less than 40, it can be desirable to use a relatively larger amount of the poly(carbonate-siloxane) copolymer. Conversely, where E is of a higher value, e.g., greater than 40, a relatively lower amount of the poly(carbonate-siloxane) copolymer can be used.

In an embodiment, the polysiloxane blocks are of formula (14) 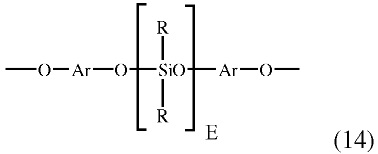 wherein E is as defined above; each R can be the same or different, and is as defined above; and Ar can be the same or different, and is a substituted or unsubstituted C₆₋₃₀ arylene, wherein the bonds are directly connected to an aromatic moiety. Ar groups in formula (11) can be derived from a C₆₋₃₀ dihydroxyarylene compound, for example a dihydroxyarylene compound of formula (3) or (6) above. dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane. Combinations comprising at least one of the foregoing dihydroxy compounds can also be used.

In another embodiment, polysiloxane blocks are of formula (15) 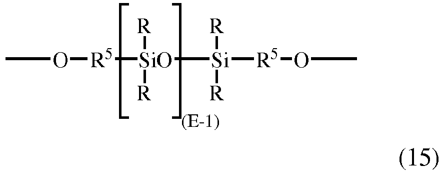 wherein R and E are as described above, and each R⁵ is independently a divalent C₁₋₃₀ organic group, and wherein the polymerized polysiloxane unit is the reaction residue of its corresponding dihydroxy compound. In a specific embodiment, the polysiloxane blocks are of formula (16) 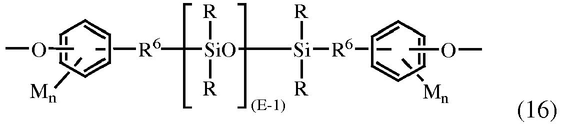 wherein R and E are as defined above. R⁶ in formula (14) is a divalent C₂₋₈ aliphatic. Each M in formula (14) can be the same or different, and can be a halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ aralkyl, C₇₋₁₂ aralkoxy, C₇₋₁₂ alkylaryl, or C₇₋₁₂ alkylaryloxy, wherein each n is independently 0, 1, 2, 3, or 4.

In an embodiment, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another embodiment, R is methyl, or a combination of methyl and trifluoropropyl, or a combination of methyl and phenyl. In still another embodiment, R is methyl, M is methoxy, n is one, R⁶ is a divalent C₁₋₃ aliphatic group. Specific polysiloxane blocks are of the formulas 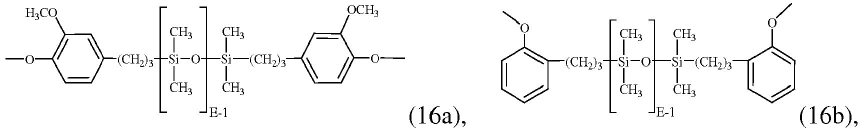 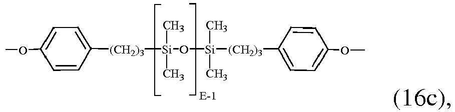 or a combination comprising at least one of the foregoing, wherein E has an average value of 2 to 200, 2 to 125, 5 to 125, 5 to 100, 5 to 50, 20 to 80, or 5 to 20.

Blocks of formula (14) can be derived from the corresponding dihydroxy polysiloxane, which in turn can be prepared effecting a platinum-catalyzed addition between the siloxane hydride and an aliphatically unsaturated monohydric phenol such as eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The poly(carbonate-siloxane) copolymers can then be manufactured, for example, by the synthetic procedure of European Patent Application Publication No. 0 524 731 A1 of Hoover, page 5, Preparation 2.

Polyorganosiloxane-polycarbonates can have a weight average molecular weight of 2,000 to 100,000 Da, specifically 5,000 to 50,000 Da as measured by GPC using a crosslinked styrene-divinyl benzene column, at a sample concentration of 1 milligram per milliliter, and as calibrated with polycarbonate standards.

The copolycarbonate can be present in an amount of 10 wt% to 99 wt%, 90 wt% to 99.8 wt%, 20 wt% to 80 wt%, 40 wt% to 70 wt%, or 50 wt% to 70 wt% based on the total weight of the thermoplastic composition.

Polycarbonates and poly(ester-carbonate)s can be manufactured by processes such as interfacial polymerization and melt polymerization. Although the reaction conditions for interfacial polymerization can vary, an exemplary process generally involves dissolving or dispersing a dihydroxy compound in aqueous NaOH or KOH, adding the resulting mixture to a water-immiscible solvent, and contacting the reactants with a carbonate precursor in the presence of a catalyst such as, for example, a tertiary amine or a phase transfer catalyst, under controlled pH conditions, e.g., 8 to 10.

The water-immiscible solvent can be, for example, methylene chloride, 1,2-dichloroethane, chlorobenzene, toluene, and the like.

The carbonate precursor can be a carbonyl halide, a bishaloformate of a dihydroxy compound, or a diaryl carbonate. The carbonyl halide can be carbonyl bromide or carbonyl chloride (phosgene). The bischloroformate can be the bischloroformate of bisphenol A, hydroquinone, ethylene glycol, neopentyl glycol, or the like. The diaryl carbonate can be a diaryl carbonate of formula (17) 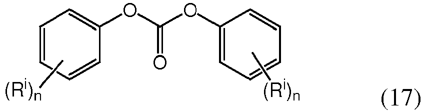 wherein n is an integer 1 to 3 and each Rⁱ is independently a linear or branched, optionally substituted C₁₋₃₄ alkyl (specifically C₁₋₆ alkyl, more specifically C₁₋₄ alkyl), C₁₋₃₄ alkoxy (specifically C₁₋₆ alkoxy, more specifically C₁₋₄ alkoxy), C₅₋₃₄ cycloalkyl, C₇₋₃₄ alkylaryl C₆₋₃₄ aryl, a halogen (specifically a chlorine), or -C(=O)OR' wherein R' is H, linear or branched C₁₋₃₄ alkyl (specifically C₁₋₆ alkyl, more specifically C₁₋₄ alkyl), C₁₋₃₄ alkoxy (specifically C₁₋₁₆ alkoxy, specifically C₁₋₄ alkoxy), C₅₋₃₄ cycloalkyl, C₇₋₃₄ alkylaryl, or C₆₋₃₄ aryl. In an embodiment, the diaryl carbonate is diphenyl carbonate, or a diaryl carbonate wherein one or both aryl groups have an electron-withdrawing substituents, for example bis(4-nitrophenyl)carbonate, bis(2-chlorophenyl)carbonate, bis(4-chlorophenyl)carbonate, bis(methyl salicyl)carbonate (BMSC), bis(4-methylcarboxylphenyl) carbonate, bis(2-acetylphenyl) carboxylate, bis(4-acetylphenyl) carboxylate. A molar ratio of diaryl carbonate to dihydroxy compound can be 2:1 to 1:2, or 1.5:1 to 1:1.5, or 1.05:1 to 1:1.05, or 1:1. In an embodiment, the molar ratio of the diaryl carbonate to the dihydroxy compound when expressed to three decimal places is 0.996 or less, or 0.962 to 0.996, or 0.968 to 0.996, or 0.971 to 0.994.

In the manufacture of poly(ester-carbonate)s by interfacial polymerization, rather than using the dicarboxylic acid or diol directly, the reactive derivatives of the diacid or diol, such as the corresponding acid halides, in particular the acid dichlorides and the acid dibromides can be used. Thus, for example instead of using isophthalic acid, terephthalic acid, or a combination comprising at least one of the foregoing acids, isophthaloyl dichloride, terephthaloyl dichloride, or a combination comprising at least one of the foregoing dichlorides can be used.

Among tertiary amines that can be used as catalysts in interfacial polymerization are aliphatic tertiary amines such as triethylamine and tributylamine, cycloaliphatic tertiary amines such as N,N-diethyl-cyclohexylamine, and aromatic tertiary amines such as N,N-dimethylaniline. Among the phase transfer catalysts that can be used are catalysts of the formula (R³)₄Q⁺X, wherein each R³ is the same or different, and is a C₁₋₁₀ alkyl; Q is a nitrogen or phosphorus atom; and X is a halogen atom or a C₁₋₈ alkoxy or C₆₋₁₈ aryloxy. Exemplary phase transfer catalysts include (CH₃(CH₂)₃)₄NX, (CH₃(CH₂)₃)₄PX, (CH₃(CH₂)₅)₄NX, (CH₃(CH₂)₆)₄NX, (CH₃(CH₂)₄)₄NX, CH₃(CH₃(CH₂)₃)₃NX, and CH₃(CH₃(CH₂)₂)₃NX, wherein X is Cl⁻, Br⁻, a C₁₋₈ alkoxy or a C₆₋₁₈ aryloxy. An effective amount of a phase transfer catalyst can be 0.1 to 10 wt%, or 0.5 to 2 wt%, each based on the weight of dihydroxy compound in the phosgenation mixture.

Alternatively, melt processes can be used to make the copolycarbonates. In the melt polymerization process, polycarbonates can generally be prepared by co-reacting, in a molten state, a dihydroxy reactant as described above and a diaryl carbonate ester as described above in the presence of a transesterification catalyst. Conditions for melt process are described, for example, in WO2013/027165 and the references cited therein. Catalysts used in the melt polymerization can include an alpha catalyst and a beta catalyst. Alpha catalysts can comprise a source of alkali or alkaline earth ions and are typically more thermally stable and less volatile than beta catalysts. Beta catalysts are typically volatile and degrade at elevated temperatures, and can comprise a tranesterification catalyst of the formula (R³)₄Q⁺X as described above. Beta catalysts are therefore preferred for use at early low-temperature polymerization stages. The alpha catalyst can be used in an amount sufficient to provide 1 x 10⁻² to 1 x 10⁻⁸ moles, specifically, 1 x 10⁴ to 1 x 10⁻⁷ moles of metal per mole of the dihydroxy compounds used. The amount of beta catalyst (e.g., organic ammonium or phosphonium salts) can be 1 x 10⁻² to 1 x 10⁻⁵, specifically 1 x 10⁻³ to 1 x 10⁻⁴ moles per total mole of the dihydroxy compounds in the reaction mixture. Quenching of the transesterification catalysts and any reactive catalysts residues with an acidic compound after polymerization is completed can also be useful in some melt polymerization processes. Among the many quenchers that can be used are alkyl sulfonic esters of the formula R⁸SO₃R⁹ wherein R⁸ is hydrogen, C₁₋₁₂ alkyl, C₆₋₁₈ aryl, or C₇₋₁₉ alkylaryl, and R⁹ is C₁₋₁₂ alkyl, C₆₋₁₈ aryl, or C₇₋₁₉ alkylaryl (e.g., benzenesulfonate, p-toluenesulfonate, methylbenzene sulfonate, ethylbenzene sulfonate, n-butyl benzenesulfonate, octyl benzenesulfonate and phenyl benzenesulfonate, methyl p-toluenesulfonate, ethyl p-toluenesulfonate, n-butyl p-toluene sulfonate, octyl p-toluenesulfonate and phenyl p-toluenesulfonate, in particular alkyl tosylates such as n-butyl tosylate).

An end-capping agent (also referred to as a chain stopper agent or chain terminating agent) can be included during polymerization to provide end groups. The end-capping agent (and thus end groups) are selected based on the desired properties of the polycarbonates. Exemplary end-capping agents are exemplified by monocyclic phenols such as phenol and C₁₋₂₂ alkyl-substituted phenols such as p-cumyl-phenol, resorcinol monobenzoate, and p-and tertiary-butyl phenol, monoethers of diphenols, such as p-methoxyphenol, and alkyl-substituted phenols with branched chain alkyl substituents having 8 to 9 carbon atoms, 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, mono-carboxylic acid chlorides such as benzoyl chloride, C₁₋₂₂ alkyl-substituted benzoyl chloride, toluoyl chloride, bromobenzoyl chloride, cinnamoyl chloride, and 4-nadimidobenzoyl chloride, polycyclic, mono-carboxylic acid chlorides such as trimellitic anhydride chloride, and naphthoyl chloride, functionalized chlorides of aliphatic monocarboxylic acids, such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups can be used.

Branched polycarbonate blocks can be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05 to 2.0 wt%. Combinations comprising linear polycarbonates and branched polycarbonates can be used.

In addition to the copolycarbonates described above, combinations of the copolycarbonate with other thermoplastic polymers, for example combinations of homopolycarbonates, copolycarbonates, and polycarbonate copolymers with polyesters, can be used. Useful polyesters include, for example, polyesters having units of formula (7), which include poly(alkylene dicarboxylates), liquid crystalline polyesters, and polyester copolymers. The polyesters described herein are generally completely miscible with the copolycarbonates when blended.

The polyesters can be obtained by interfacial polymerization or melt-process condensation as described above, by solution phase condensation, or by transesterification polymerization wherein, for example, a dialkyl ester such as dimethyl terephthalate can be transesterified with ethylene glycol using acid catalysis, to generate poly(ethylene terephthalate). A branched polyester, in which a branching agent, for example, a glycol having three or more hydroxyl groups or a trifunctional or multifunctional carboxylic acid has been incorporated, can be used. Furthermore, it can be desirable to have various concentrations of acid and hydroxyl end groups on the polyester, depending on the ultimate end use of the composition.

Useful polyesters can include aromatic polyesters, poly(alkylene esters) including poly(alkylene arylates), and poly(cycloalkylene diesters). Aromatic polyesters can have a polyester structure according to formula (12), wherein J and T are each aromatic groups as described above. In an embodiment, useful aromatic polyesters can include poly(isophthalate-terephthalate-resorcinol) esters, poly(isophthalate-terephthalate-bisphenol A) esters, poly[(isophthalate-terephthalate-resorcinol) ester-co-(isophthalate-terephthalate-bisphenol A)] ester, or a combination comprising at least one of these. Also contemplated are aromatic polyesters with a minor amount, e.g., 0.5 to 10 weight percent, based on the total weight of the polyester, of units derived from an aliphatic diacid or an aliphatic polyol to make copolyesters. Poly(alkylene arylates) can have a polyester structure according to formula (12), wherein T comprises groups derived from aromatic dicarboxylates, cycloaliphatic dicarboxylic acids, or derivatives thereof. Examples of specifically useful T groups include 1,2-, 1,3-, and 1,4-phenylene; 1,4- and 1,5- naphthylenes; cis- or trans-1,4-cyclohexylene; and the like. Specifically, where T is 1,4-phenylene, the poly(alkylene arylate) is a poly(alkylene terephthalate). In addition, for poly(alkylene arylate), specifically useful alkylene groups J include, for example, ethylene, 1,4-butylene, and bis-(alkylene-disubstituted cyclohexane) including cis- or trans-1,4-(cyclohexylene)dimethylene. Examples of poly(alkylene terephthalates) include poly(ethylene terephthalate) (PET), poly(1,4-butylene terephthalate) (PBT), and poly(n-propylene terephthalate) (PPT). Also useful are poly(alkylene naphthoates), such as poly(ethylene naphthanoate) (PEN), and poly(butylene naphthanoate) (PBN). A specifically useful poly(cycloalkylene diester) is poly(1,4-cyclohexanedimethylene terephthalate) (PCT). Combinations comprising at least one of the foregoing polyesters can also be used.

Copolymers comprising alkylene terephthalate repeating ester units with other ester groups can also be useful. Specifically useful ester units can include different alkylene terephthalate units, which can be present in the polymer chain as individual units, or as blocks of poly(alkylene terephthalates). Copolymers of this type include poly(cyclohexanedimethylene terephthalate)-co-poly(ethylene terephthalate), abbreviated as PETG where the polymer comprises greater than or equal to 50 mol% of poly(ethylene terephthalate), and abbreviated as PCTG where the polymer comprises greater than 50 mol% of poly(1,4-cyclohexanedimethylene terephthalate).

Poly(cycloalkylene diester)s can also include poly(alkylene cyclohexanedicarboxylate)s. Of these, a specific example is poly(1,4-cyclohexane-dimethanol-1,4-cyclohexanedicarboxylate) (PCCD), having recurring units of the formula (12a) 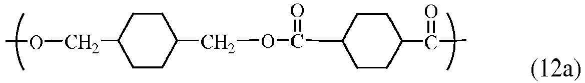 wherein, as described using formula (12), J is a 1,4-cyclohexanedimethylene group derived from 1,4-cyclohexanedimethanol, and T is a cyclohexane ring derived from cyclohexanedicarboxylate or a chemical equivalent thereof, and can comprise the cis-isomer, the trans-isomer, or a combination comprising at least one of the foregoing isomers.

The polycarbonate and polyester can be used in a weight ratio of 1:99 to 99:1, specifically 10:90 to 90:10, and more specifically 30:70 to 70:30, depending on the function and properties desired.

It is desirable for such a polyester and polycarbonate blend to have an MVR of 5 to 150 cc/10 min., specifically 7 to 125 cc/10 min, more specifically 9 to 110 cc/10 min, and still more specifically 10 to 100 cc/10 min., measured at 300°C and a load of 1.2 kilograms according to ASTM D1238-04.

In some embodiments, the thermoplastic composition further includes a bisphenol A homopolycarbonate. The bisphenol A homopolymer carbonate can be derived from a bisphenol A monomer having a purity less than 99.7% determined by HPLC. Alternatively, the bisphenol A homopolycarbonate can be derived from a high purity bisphenol A monomer having a purity equal to or greater than 99.7% determined by HPLC.

In an embodiment, the bisphenol A polycarbonate homopolymer is a linear bisphenol A polycarbonate homopolymer having a weight average molecular weight of 10,000 to 100,000 Daltons, specifically 15,000 to 50,000 Daltons, more specifically 17,000 to 35,000 Daltons, as measured by gel permeation chromatography (GPC), using a crosslinked styrene-divinylbenzene column and calibrated to bisphenol A homopolycarbonate references. GPC samples are prepared at a concentration of 1 mg per ml, and are eluted at a flow rate of 1.5 ml per minute.

The polycarbonate homopolymer can be present in an amount of 10 to 90 wt%, preferably 10 to 80 wt%, 10 to 60 wt%, 15 to 50 wt%, or 20 to 45 wt%, based on the total weight of the thermoplastic composition.

In some embodiments, the thermoplastic composition further includes an acid stabilizer, preferably an ester of a C₆₋₃₀ aryl, C₇₋₃₀ aralkyl, or C₁₋₃₀ alkyl sulfonic acid, or a combination thereof. The acid stabilizer can be represented by formula (18) 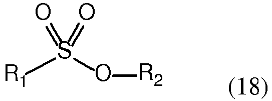 wherein R₁ is a C₆₋₃₀ aryl, C₇₋₃₀ arylalkylene or C₁₋₃₀ alkyl, and R₂ is C₁₋₃₀ alkyl. Preferably, R₁ is a C₆₋₁₂ aryl and R₂ is C₁₋₁₀ alkyl. In an embodiment, the stabilizer is an ester of a C₆₋₁₂ aryl sulfonic acid, preferably the stabilizer is an ester of p-toluenesulfonic acid, and more preferably the stabilizer is butyl tosylate.

The acid stabilizer can be used in an amount of up to 40 ppm, preferably 2 to 40 ppm, more preferably 2 to 20 ppm, and still more specifically 4 to 15 ppm, by weight based on the total weight of the thermoplastic composition.

The thermoplastic composition can also contain an epoxy additive. The inclusion of an epoxy compound can be used as a chain extender to improve molecular weight stability of the thermoplastic composition after hydro aging or autoclaving. Epoxy compounds useful as additives include epoxy modified acrylic oligomers or polymers (such as a styrene-acrylate-epoxy polymer, prepared from for example a combination of: a substituted or unsubstituted styrene such as styrene or 4-methylstyrene; an acrylate or methacrylate ester of a C₁₋₂₂ alkyl alcohol such as methyl acrylate, methyl methacrylate, ethyl acrylate, butyl acrylate, or the like; and an epoxy-functionalized acrylate such as glycidyl acrylate, glycidyl methacrylate, 2-(3,4-epoxycyclohexyl)ethyl acrylate, 2-(3,4-epoxycyclohexyl)ethyl methacrylate, or the like), or an epoxy carboxylate oligomer based on cycloaliphatic epoxides (such as, for example, 3,4-epoxycyclohexylmethyl-3,4-epoxycyclohexylcarboxylate, or the like). Specific commercially available exemplary epoxy functionalized stabilizers include Cycloaliphatic Epoxide Resin ERL-4221 supplied by Union Carbide Corporation (a subsidiary of Dow Chemical), Danbury, CT; and epoxy modified acrylates such as JONCRYL ADR-4300 and JONCRYL ADR-4368, available from Johnson Polymer Inc., Sturtevant, WI. Epoxy additives can be used in amounts of up to 1 wt%, specifically 0.001 to 1 wt%, more specifically 0.001 to 0.5 wt%, based on the total weight of the thermoplastic composition. In an embodiment, the epoxy additive can be included in an amount of 0.001 to 0.3 wt%, specifically 0.01 to 0.3 wt%, and more specifically 0.1 to 0.3 wt%, based on the total weight of the thermoplastic composition. Use of greater amounts of epoxy compound may cause more splay, i.e., mold lines which fan outward from the point of injection into the mold, and observable to the unaided eye in molded articles comprising the thermoplastic composition.

The thermoplastic compositions can include various additives ordinarily incorporated into polymer compositions of this type, with the proviso that the additive(s) are selected so as to not significantly adversely affect the desired properties of the thermoplastic composition, in particular melt flow, thermal, transparency, and surface properties. The additive composition or individual additives can be mixed at a suitable time during the mixing of the components for forming the composition. The additive can be soluble or non-soluble in polycarbonate. The additive composition can include an impact modifier, flow modifier, filler (e.g., a particulate polytetrafluoroethylene (PTFE), glass, carbon, mineral, or metal), reinforcing agent (e.g., glass fibers), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g, a dye or pigment), surface effect additive, radiation stabilizer, flame retardant, anti-drip agent (e.g., a PTFE-encapsulated styrene-acrylonitrile copolymer (TSAN)), or a combination comprising one or more of the foregoing. For example, a combination of a heat stabilizer, mold release agent, and ultraviolet light stabilizer can be used. In general, the additives are used in the amounts generally known to be effective. For example, the total amount of the additive composition (other than any impact modifier, filler, or reinforcing agent) can be 0.001 to 10.0 wt%, or 0.01 to 5 wt%, each based on the total weight of the polymer in the composition.

Antioxidant additives include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or combinations comprising at least one of the foregoing antioxidants. Antioxidants are used in amounts of 0.01 to 0.1 parts by weight, based on 100 parts by weight of the total composition, excluding any filler.

Heat stabilizer additives include organophosphites (e.g. triphenyl phosphite, tris-(2,6-dimethylphenyl)phosphite, tris-(mixed mono-and di-nonylphenyl)phosphite or the like), phosphonates (e.g, dimethylbenzene phosphonate or the like), phosphates (e.g., trimethyl phosphate, or the like), or combinations comprising at least one of the foregoing heat stabilizers. The heat stabilizer can be tris(2,4-di-t-butylphenyl) phosphate available as IRGAPHOS™ 168. Heat stabilizers are generally used in amounts of 0.01 to 5 wt%, based on the total weight of polymer in the composition.

Light stabilizers, in particular ultraviolet light (UV) absorbing additives, also referred to as UV stabilizers, include hydroxybenzophenones (e.g., 2-hydroxy-4-n-octoxy benzophenone), hydroxybenzotriazines, cyanoacrylates, oxanilides, benzoxazinones (e.g., 2,2'-(1,4- phenylene)bis(4H-3,1-benzoxazin-4-one, commercially available under the trade name CYASORB UV-3638 from Cytec), aryl salicylates, hydroxybenzotriazoles (e.g., 2-(2-hydroxy-5-methylphenyl)benzotriazole, 2-(2-hydroxy-5-tert-octylphenyl)benzotriazole, and 2-(2H-benzotriazol-2-yl)-4-(1,1,3,3-tetramethylbutyl)-phenol, commercially available under the trade name CYASORB 5411 from Cytec) or combinations comprising at least one of the foregoing light stabilizers. The UV stabilizers can be present in an amount of 0.01 to 1 wt%, specifically, 0.1 to 0.5 wt%, and more specifically, 0.15 to 0.4 wt%, based on the total weight of polymer in the composition.

Reinforcing agents and fillers include, for example, silicates and silica powders such as aluminum silicate (mullite), synthetic calcium silicate, zirconium silicate, fused silica, crystalline silica graphite, natural silica sand, or the like; boron powders such as boron-nitride powder, boron-silicate powders, or the like; oxides such as TiO₂, aluminum oxide, magnesium oxide, or the like; calcium sulfate (as its anhydride, dihydrate or trihydrate); calcium carbonates such as chalk, limestone, marble, synthetic precipitated calcium carbonates, or the like; talc, including fibrous, modular, needle shaped, lamellar talc, or the like; wollastonite; surface-treated wollastonite; glass spheres such as hollow and solid glass spheres, silicate spheres, cenospheres, aluminosilicate (armospheres), or the like; kaolin, including hard kaolin, soft kaolin, calcined kaolin, kaolin comprising various coatings known in the art to facilitate compatibility with the polymer matrix, or the like; single crystal fibers or "whiskers" such as silicon carbide, alumina, boron carbide, iron, nickel, copper, or the like; fibers (including continuous and chopped fibers) such as asbestos, carbon fibers, glass fibers, such as E, A, C, ECR, R, S, D, or NE glasses, or the like; sulfides such as molybdenum sulfide, zinc sulfide or the like; barium compounds such as barium titanate, barium ferrite, barium sulfate, heavy spar, or the like; metals and metal oxides such as particulate or fibrous aluminum, bronze, zinc, copper and nickel or the like; flaked fillers such as glass flakes, flaked silicon carbide, aluminum diboride, aluminum flakes, steel flakes or the like; fibrous fillers, for example short inorganic fibers such as those derived from blends comprising at least one of aluminum silicates, aluminum oxides, magnesium oxides, and calcium sulfate hemihydrate or the like; natural fillers and reinforcements, such as wood flour obtained by pulverizing wood, fibrous products such as cellulose, cotton, sisal, jute, starch, cork flour, lignin, ground nut shells, corn, rice grain husks or the like; organic fillers such as polytetrafluoroethylene; reinforcing organic fibrous fillers formed from organic polymers capable of forming fibers such as poly(ether ketone), polyimide, polybenzoxazole, poly(phenylene sulfide), polyesters, polyethylene, aromatic polyamides, aromatic polyimides, polyetherimides, polytetrafluoroethylene, acrylic polymers, poly(vinyl alcohol) or the like; as well as additional fillers and reinforcing agents such as mica, clay, feldspar, flue dust, fillite, quartz, quartzite, perlite, tripoli, diatomaceous earth, carbon black, or the like, or combinations comprising at least one of the foregoing fillers or reinforcing agents.

The reinforcing agents and fillers can be coated with a layer of metallic material to facilitate conductivity, or surface treated with silanes to improve adhesion and dispersion with the polymer matrix. In addition, the reinforcing fillers can be provided in the form of monofilament or multifilament fibers and can be used individually or in combination with other types of fiber, through, for example, co-weaving or core/sheath, side-by-side, orange-type or matrix and fibril constructions, or by other methods known to one skilled in the art of fiber manufacture. Co-woven structures include glass fiber-carbon fiber, carbon fiber-aromatic polyimide (aramid) fiber, and aromatic polyimide fiberglass fiber or the like. Fibrous fillers can be supplied in the form of, for example, rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids. Reinforcing agents are generally used in amounts of 1 to 50 parts by weight, based on 100 parts by weight of the thermoplastic composition.

Useful flame retardants include organic compounds that include phosphorus, bromine, or chlorine. Non-brominated and non-chlorinated phosphorus-containing flame retardants can be preferred in certain applications for regulatory reasons, for example organic phosphates and organic compounds containing phosphorus-nitrogen bonds.

Flame retardant aromatic phosphates include triphenyl phosphate, tricresyl phosphate, isopropylated triphenyl phosphate, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, and 2-ethylhexyl diphenyl phosphate. Di- or polyfunctional aromatic phosphorus-containing compounds are also useful, for example resorcinol tetraphenyl diphosphate (RDP), the bis(diphenyl) phosphate of hydroquinone and the bis(diphenyl) phosphate of bisphenol A, respectively, and their oligomeric and polymeric counterparts. Flame retardant compounds containing phosphorus-nitrogen bonds include phosphonitrilic chloride, phosphorus ester amides, phosphoric acid amides, phosphonic acid amides, phosphinic acid amides, and tris(aziridinyl) phosphine oxide. When used, phosphorus-containing flame retardants are present in amounts of 0.1 to 30 parts by weight, more specifically 1 to 20 parts by weight, based on 100 parts by weight of the total composition, excluding any filler.

Halogenated materials can also be used as flame retardants, for example bisphenols of which the following are representative: 2,2-bis-(3,5-dichlorophenyl)-propane; bis-(2-chlorophenyl)-methane; bis(2,6-dibromophenyl)-methane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2-bis-(3-phenyl-4-bromophenyl)-ethane; 2,6-bis-(4,6-dichloronaphthyl)-propane; and 2,2-bis-(3,5-dichloro-4-hydroxyphenyl)-propane 2,2 bis-(3-bromo-4-hydroxyphenyl)-propane. Other halogenated materials include 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, and 2,4'-dichlorobiphenyl as well as decabromo diphenyl oxide, as well as oligomeric and polymeric halogenated aromatic compounds, such as a copolycarbonate of bisphenol A and tetrabromobisphenol A and a carbonate precursor, e.g., phosgene. Metal synergists, e.g., antimony oxide, can also be used with the flame retardant. When present, halogen containing flame retardants are present in amounts of 1 to 25 parts by weight, more specifically 2 to 20 parts by weight, based on 100 parts by weight of the total composition, excluding any filler.

Alternatively, the thermoplastic composition can be essentially free of chlorine and bromine. "Essentially free of chlorine and bromine" is defined as having a bromine or chlorine content of less than or equal to 100 parts per million (ppm) by weight, less than or equal to 75 ppm, or less than or equal to 50 ppm, based on the total parts by weight of the composition, excluding any filler.

Inorganic flame retardants can also be used, for example salts of C₁₋₁₆ alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate; salts such as Na₂CO₃, K₂CO₃, MgCO₃, CaCO₃, and BaCO₃, or fluoro-anion complexes such as Li₃AlF₆, BaSiF₆, KBF₄, K₃AlF₆, KAlF₄, K₂SiF₆, or Na₃AlF₆. When present, inorganic flame retardant salts are present in amounts of 0.01 to 10 parts by weight, more specifically 0.02 to 1 parts by weight, based on 100 parts by weight of the total composition, excluding any filler.

In some embodiments, the thermoplastic composition has a UL94 rating of VO at a thickness of 2.5 mm or greater. In other embodiments, the thermoplastic composition has a UL94 rating of V0 at a thickness of 0.8 to 1.5 mm.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. An TSAN comprises 50 wt% PTFE and 50 wt% SAN, based on the total weight of the encapsulated fluoropolymer. The SAN can comprise, for example, 75 wt% styrene and 25 wt% acrylonitrile based on the total weight of the copolymer. Antidrip agents can be used in amounts of 0.1 to 10 parts by weight, based on 100 parts by weight of the total composition, excluding any filler.

The thermoplastic compositions can be manufactured by various methods known in the art. For example, powdered polycarbonate, and other optional components are first blended, optionally with any fillers, in a high speed mixer or by hand mixing. The blend is then fed into the throat of a twin-screw extruder via a hopper. Alternatively, at least one of the components can be incorporated into the composition by feeding it directly into the extruder at the throat or downstream through a sidestuffer, or by being compounded into a masterbatch with a desired polymer and fed into the extruder. The extruder is generally operated at a temperature higher than that necessary to cause the composition to flow. The extrudate can be immediately quenched in a water bath and pelletized. The pellets so prepared can be one-fourth inch long or less as desired. Such pellets can be used for subsequent molding, shaping, or forming.

In certain embodiments, which are preferred, the thermoplastic compositions can have a low residual impurity content, in particular less than 2 ppm by weight of each of lithium, sodium, potassium, calcium, magnesium, ammonium, chloride, bromide, fluoride, nitrite, nitrate, phosphite, phosphate, sulfate, acetate, citrate, oxalate, trimethylammonium, and triethylammonium. It is to be understood that the foregoing residual impurities can exist in the thermoplastic compositions in un-ionized form (for example as triethylamine or formic acid), but are determined based on their ionized form.

The thermoplastic compositions can be molded under standard molding conditions in range of 300 to 350°C depending on the glass transition temperature of the composition. For example, the thermoplastic compositions can be molded at a temperature of 100 to 175°C above the glass transition temperature of the polycarbonate composition for a residence time of 2 to 20 minutes.

The thermoplastic compositions can have a glass transition temperature of 150°C or higher, preferably 155 to 280°C, more preferably 165 to 260°C, and even more preferably 185 to 230°C, determined by differential scanning calorimetry (DSC) as per ASTM D3418 with a 20°C/min heating rate.

The thermoplastic compositions can have excellent transparency. In an embodiment, the thermoplastic compositions have a haze less of less than 15%, more preferably less than 10%, more preferably less than 5%, even more preferably less than 1% and a transmission greater than 85%, more preferably greater than 87%, more preferably greater than 89%, even more preferably greater than 90% each measured according to ASTM D1003-00 using the color space CIE1931 (Illuminant C and a 2° observer) at a 2.5 mm thickness. The thermoplastic compositions are molded under standard molding conditions. For example, the thermoplastic compositions are molded at a temperature of 100 to 175°C above the glass transition temperature of the thermoplastic composition for a residence time of 2 to 20 minutes.

The thermoplastic compositions can have excellent transparency in the infrared wavelength range. In an embodiment, the compositions have a transmission at wavelength of 1,000 nm of greater than 87%, preferably greater than 88%, more preferably greater than 89%, as measured with Perkin Elmer 950 spectrometer equipped with 15 cm integrated sphere on 2.5 mm. In another embodiment, the compositions have a transmission at wavelength of 1,250 nm of greater than 87%, preferably greater than 88%, more preferably greater than 89%, as measured with Perkin Elmer 950 spectrometer equipped with 15 cm integrated sphere on 2.5 mm. In still another embodiment, the compositions have a transmission at wavelength of 1,560 nm of greater than 85%, preferably greater than 86%, more preferably greater than 87%, as measured with Perkin Elmer 950 spectrometer equipped with 15 cm integrated sphere on 2.5 mm.

The thermoplastic compositions can have excellent color. In an embodiment, the thermoplastic compositions have a yellowness index of less than 20, more preferably less than 10, more preferably less than 5, more preferably less than 3, as measured by ASTM D1925 on a 2.5 mm plaque. The thermoplastic compositions are molded under standard molding conditions. For example, the thermoplastic compositions are molded at a temperature of 100 to 175°C above the glass transition temperature of the thermoplastic composition for a residence time of 2 to 20 minutes.

The thermoplastic compositions have excellent color stability during exposure for prolonged time at elevated temperatures in the absence of moisture, referred to further as heat ageing. The thermoplastic compositions can have an increase in yellowness index of less than 10, more preferably less than 5, more preferably less than 3, during 2500 hours of heat aging at 140°C, as measured by ASTM D1925 on a 2.5 mm thick molded plaque. In an embodiment, the thermoplastic compositions can have an increase in yellowness index of less than 20, more preferably less than 10, more preferably less than 5, during 2500 hours of heat aging at 150°C, as measured by ASTM D1925 on a 2.5 mm thick molded plaque. In another embodiment, the thermoplastic compositions can have an increase in yellowness index of less than 20, more preferably less than 10, more preferably less than 5, during 1000 hours of heat aging at 160°C, as measured by ASTM D1925 on a 2.5 mm thick molded plaque. In still another embodiment, the thermoplastic compositions can have an increase in yellowness index of less than 20, more preferably less than 10, more preferably less than 5, during 500 hours of heat aging at 170°C, as measured by ASTM D1925 on a 2.5 mm thick molded plaque.

The thermoplastic compositions have excellent color stability during exposure for prolonged time at elevated temperatures in the presence of moisture, referred to further as hydro ageing. In an embodiment, the thermoplastic compositions have an increase in yellowness index of less than 5, more preferably less than 3, more preferably less than 1, after 1000 hours of hydro ageing at 80°C and 85% relative humidity, as measured by ASTM D1925 on a 2.5 mm thick molded plaque.

The thermoplastic compositions have excellent color stability during exposure for prolonged time to autoclave conditions or multiple cycle of autoclave sterilization. In an embodiment, the thermoplastic compositions have an increase in yellowness index of less than 2, more preferably less than 1, after 100 hours of autoclaving at 121°C, as measured by ASTM D1925 on a 2.5 mm thick molded plaque. In an embodiment, the thermoplastic compositions have an increase in yellowness index of less than 5, more preferably less than 3, more preferably less than 1, after 100 hours of autoclaving at 134°C, as measured by ASTM D1925 on a 2.5 mm thick molded plaque. In another embodiment, the thermoplastic compositions have an increase in yellowness index of less than 10, more preferably less than 5, more preferably less than 3, after 100 hours of autoclaving at 140°C, as measured by ASTM D1925 on a 2.5 mm thick molded plaque.

Shaped, formed, or molded articles comprising the thermoplastic compositions are also provided. The compositions can be molded into useful shaped articles by a variety of methods, such as part production via multi-cavity tools; molding such as injection molding, gas assist injection molding, vacuum molding, over-molding, compression molding, rotary molding, heat/cool molding, transfer molding, or cavity molding; thermoforming; extruding; calendaring; casting; or the like. The article can be a molded article, a thermoformed article, an extruded film, an extruded sheet, one or more layers of a multi-layer article, a three dimensional (3D) printed part, a substrate for a coated article, or a substrate for a metallized article made from the thermoplastic composition.

Some examples of the articles include a lens or cover for lighting devices, a lens holder, motor vehicle headlights, automotive rear lights, automotive fog lights, flash lights, cameras, mobile phone cameras; a light guide, a substrate film, a signal indicator, a waveguide element, a reflector, a collimator, a housing for a light source, a lamp bezel, a lamp holder, a lamp cover, a display screen, glazing, a safety goggle, a visor, a medical device, a face shield, an optical fiber, a fuse, a part of a domestic appliance, a window or door for domestic appliances, computer and business machine housings such as housings for monitors, handheld electronic device housings such as housings for cell phones, electrical connectors, a fire shield, a food tray, a packaging film, an animal cage, a tray, an optical film, a light bulb, or a film laminate.

Other examples of articles include a flash lens, a camera lens, a mobile phone camera lens, a tablet camera lens, a laptop camera lens, a sensor lens, a proximity sensor lens, a gesture control lens, an infrared sensor lens, a scanner lens, an illumination device lens, a safety glass lens, an ophthalmic corrective lens, a projector lens, an imaging lens, an auto lens, , a security camera lens, an automotive camera lens, an automotive sensing lens, a motion detector lens, a vehicle headlamp lens, a vehicle foglight lens, a vehicle rearlight lens, a camera sensor lens, an LED lens, a helmet, a respirator, a mask, a protective system, a shielding system, a syringe, blood filter housing, blood bag, solution bag, intravenous connector, dialyzer, catheter, medical storage tray, medical appliance, medical tubing, cardiac pacemaker and defibrillator, cannula, implantable prosthesis, cardiac assist device, heart valve, vascular graft, extra-corporeal device, artificial organ, pacemaker lead, defibrillator lead, blood pump, balloon pump, A-V shunt, biosensor, membrane for cell encapsulation, wound dressing, artificial joint, orthopedic implant and syringe, food tray, animal cage, cable sheathing, structural component for pumps and vehicles, mining ore screen and conveyor belt, aeronautical component, chocolate mold, watercooker component, washer component, dishwasher component, or dishwasher safe article, a microwave, an oven door, a touch sensor, packaging, a label, a gas barrier, an anti-fog assembly, an anti-reflective assembly, an encapsulant, a photovoltaic panel, a sensor, a window, a computer screen, a liquid crystal display screen, a screen for a hand-held electronic devise, or an organic light-emitting diode display screen.

Advantageously, the articles have no significant part distortion or discoloration when the articles are subjected to a secondary operation such as over-molding, lead-free soldering, low temperature soldering, or coating with high temperature curing, or a combination thereof.

This disclosure is further illustrated by the following examples, which are nonlimiting.

### EXAMPLES

The materials used in the Examples are described in Table 1.

**Table 1.**

| Component | Chemical Description | Source |
|---|---|---|
| PPPBP | 2-phenyl-3,3-bis(4-hydroxyphenyl)phthalimide | SABIC |
| RPBP | 2-phenyl-3-(dihydroxyfluoresceinyl)phthalimidine | SABIC |
| HHPC | N-phenylphenolphthaleinylbisphenol, 2,2-bis(4-hydro) - bisphenol A polycarbonate copolymer, 25 mol % PPPBP, Mw = 21-25 kDa as determined by GPC using bisphenol A polycarbonate standards, para-cumylphenol (PCP) end-capped, with BPA carbonate units derived from BPA having 99.4-99.5% purity | SABIC |
| BPA | Bisphenol A | SABIC |
| BMSC | Bismethyl salicylcarbonate (CAS Reg. No. 82091-12-1) | SABIC |
| NaOH | Sodium hydroxide (CAS Reg. No. 1310-73-2) | Sigma-Aldrich |
| TMAH | Tetramethylammonium hydroxide, 25 wt% solution in water (CAS Reg. No. 75-59-2) | Sigma-Aldrich |

### Example 1

An exemplary composition was prepared by an exemplary melt polymerization process. A glass tube was charged with 35 grams (g) of BMSC, 15.83 g of BPA, 13 g of RPBP, and an aqueous solution of NaOH and TMAH in an amount corresponding to 0.005 millimoles (mmol) of NaOH and 0.15 mmol of TMAH per the number of moles of BPA and RPBP combined. After nitrogen purging of the glass tube, the temperature-pressure regimen used to carry out the melt polymerization comprised the steps of heating for the indicated time periods at the indicated temperatures and pressures shown in Table 2 below. After the final reaction stage, the glass tube was brought back to atmospheric pressure and copolycarbonate sample was recovered by breaking glass tube.

**Table 2.**

| Stage | Temperature (°C) | | Pressure (mbar) | Time (Minutes) |
|---|---|---|---|---|
| | Reactor | Condenser | | |
| 1 | 180 | 120 | 915 | 15 |
| 2 | 220 | 120 | 915 | 15 |
| 3 | 250 | 120 | 100 | 15 |
| 4 | 315 | 120 | atm* | 7.5 |

| | | | | |
|---|---|---|---|---|
| *atm is ambient atmospheric pressure | | | | |

The resulting RPBP-BPA copolymer was further characterized by NMR in CDCl₃: chemical shifts δ = 8.0 ppm (2H), 7.54-7.50 ppm (m, 4H), 7.25 - 7.13 ppm (m, 47H), 6.95-6.92 ppm (m, ∼85H), 1.67 ppm (s, ∼44H), and 1.55 ppm (s, 10H).

### Comparative Example 1

The same procedure as Example 1 was used, except 13.42 g of PPPBP was used instead of RPBP and the melt polymerization followed the conditions shown in Table 3.

**Table 3.**

| Stage | Temperature (°C) | | Pressure (mbar) | Time (Minutes) |
|---|---|---|---|---|
| | Reactor | Condenser | | |
| 1 | 180 | 120 | 915 | 15 |
| 2 | 220 | 120 | 915 | 15 |
| 3 | 230 | 120 | 100 | 15 |
| 4 | 300 | 120 | atm* | 7.5 |

| | | | | |
|---|---|---|---|---|
| *atm is ambient atmospheric pressure | | | | |

The resulting PPPBP-BPA copolymer was further characterized by NMR in CDCl₃: chemical shifts δ = 7.56 ppm (2H), 7.30 ppm (4H), 7.28 - 7.16 ppm (m, 47H), 6.95-6.92 ppm (m, 5H), and 1.71 ppm (s 23H).

The weight average molecular weights of the copolycarbonates were determined by gel permeation chromatography (GPC), using a crosslinked styrene-divinylbenzene column and calibrated to bisphenol A homopolycarbonate references. GPC samples were prepared at a concentration of 1 mg per ml, and are eluted at a flow rate of 1.5 ml per minute.

The molar percent of the copolymer units can be determined by nuclear magnetic resonance spectroscopy (NMR), which indicates the presence of RPBP units in the copolymer with signature peaks at 7.5 ppm which are from the aromatic protons of RPBP, indicating RPBP incorporation of about 29 mol% of the copolymer. The NMR spectrum for Comparative Example 1 indicates PPPBP incorporation in the copolymer with signature peaks at 7.56 ppm, indicating PPPBP incorporation of about 33 mol% of the copolymer.

Table 4 summarizes the weight average molecular weight (Mw), number average molecular weight (Mn), and subunit composition for Example 1 and Comparative Example 1.

**Table 4.**

| | Mw (Da) | Mn (Da) | Subunit composition |
|---|---|---|---|
| Example 1 | 28928 | 13572 | 29 mol% RPBP |
| Comparative Example 1 | 40444 | 18631 | 33 mol% PPPBP |

Glass transition temperature (T_{g}) was determined using thermogravimetric analysis (TGA). Table 5 summarizes the Tg for Example 1, Comparative Example 1, and HHPC.

**Table 5.**

| | Tg (°C) |
|---|---|
| HHPC | 182 |
| Comparative Example 1 | 183 |
| Example 1 | 196 |

As shown in Table 5, Example 1 had the highest Tg.

All ranges disclosed herein are inclusive of the endpoints, and the endpoints are independently combinable with each other. "Combinations" is inclusive of blends, mixtures, alloys, reaction products, and the like. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. It is to be understood that the described elements can be combined in any suitable manner in the various embodiments.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.
The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Aryloxy" means an aryl group that is linked via an oxygen (i.e., aryl-O-). "Arylene" means a divalent aryl group. "Alkylarylene" means an arylene group substituted with an alkyl group. "Arylalkylene" means an alkylene group substituted with an aryl group (e.g., benzyl).

The prefix "halo" means a group or compound including one more of a fluoro, chloro, bromo, or iodo substituent. A combination of different halo groups (e.g., bromo and fluoro), or only chloro groups can be present.

The prefix "hetero" means that the compound or group includes at least one ring member that is a heteroatom (e.g., 1, 2, or 3 heteroatom(s)), wherein the heteroatom(s) is each independently N, O, S, Si, or P.

"Substituted" means that the compound, group, or atom is substituted with at least one (e.g., 1, 2, 3, or 4) substituents instead of hydrogen, where each substituent is independently nitro (-NO₂), cyano (-CN), hydroxy (-OH), halogen, thiol (-SH), thiocyano (-SCN), C₁₋₆ alkyl, C₂₋₆ alkenyl, C₂₋₆ alkynyl, C₁₋₆ haloalkyl, C₁₋₉ alkoxy, C₁₋₆ haloalkoxy, C₃₋₁₂ cycloalkyl, C₅₋₁₈ cycloalkenyl, C₆₋₁₂ aryl, C₇₋₁₃ arylalkylene (e.g., benzyl), C₇₋₁₂ alkylarylene (e.g., toluyl), C₄₋₁₂ heterocycloalkyl, C₃₋₁₂ heteroaryl, C₁₋₆ alkyl sulfonyl (-S(=O)₂-alkyl), C₆₋₁₂ arylsulfonyl (-S(=O)₂-aryl), or tosyl (CH₃C₆H₄SO₂-), provided that the substituted atom's normal valence is not exceeded, and that the substitution does not significantly adversely affect the manufacture, stability, or desired property of the compound. When a compound is substituted, the indicated number of carbon atoms is the total number of carbon atoms in the compound or group, including those of any substituents.

While particular embodiments have been described, alternatives, modifications, variations, improvements, and substantial equivalents that are or may be presently unforeseen may arise to applicants or others skilled in the art.

## Claims

1. A thermoplastic composition comprising:
a copolycarbonate comprising bisphenol A carbonate units and second carbonate units of formula (1a) 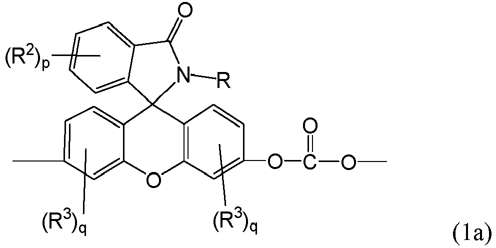 wherein
R is a C₁₋₂₅ hydrocarbyl, preferably a C₁₋₆ alkyl, a phenyl, or a phenyl substituted with up to five C₁₋₆ alkyl groups, more preferably a C₁₋₃ alkyl or a phenyl;
each occurrence of R² and R³ is independently a hydrogen, a halogen, or a C₁₋₂₅ hydrocarbyl, preferably a hydrogen, a halogen, or a C₁₋₆ alkyl, more preferably a hydrogen or a C₁₋₃ alkyl; and
p is 0 to 4, preferably 0 or 1, more preferably 0; and
each q is independently 0 to 3, preferably 0 or 1, more preferably 0; and optionally a bisphenol A homopolycarbonate.

2. The thermoplastic composition of claim 1, wherein the second carbonate units in the copolycarbonate are of formula (1b) 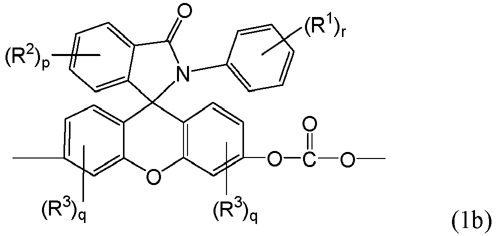 wherein
each occurrence of R¹ is independently a hydrogen, a phenyl, or a C₁₋₆ alkyl, preferably a hydrogen or a C₁₋₃ alkyl;
each occurrence of R² and R³ is independently a hydrogen, a halogen, or a C₁₋₂₅ hydrocarbyl, preferably a hydrogen or a C₁₋₆ alkyl, more preferably a hydrogen or a C₁₋₃ alkyl; and
p and q are each independently 0-4, preferably 0 or 1, more preferably 0; and
r is 0-5, preferably 0 or 1, more preferably 0.

3. The thermoplastic composition of claim 1 or 2, wherein the second carbonate units in the copolycarbonate are of formula (1c)

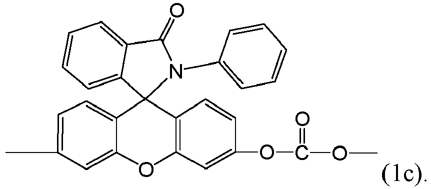

4. The thermoplastic composition of any one or more of claims 1 to 3, wherein the copolycarbonate comprises, based on the total number of carbonate units in the copolycarbonate,
5 to 95 mole percent, preferably 25 to 85 mole percent, more preferably 50 to 80 mole percent of the bisphenol A carbonate units; and
5 to 95 mole percent, preferably 15 to 75 mole percent, more preferably 20 to 50 mole percent of the second carbonate units.

5. The thermoplastic composition of any one or more of claims 1 to 4, wherein the copolycarbonate further comprises high heat carbonate unit different from the bisphenol A carbonate unit and the second carbonate unit, the high heat carbonate unit comprising one or more of: 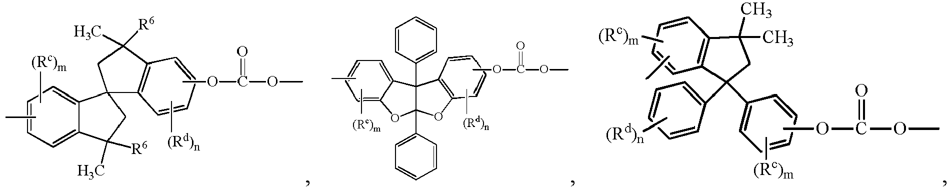 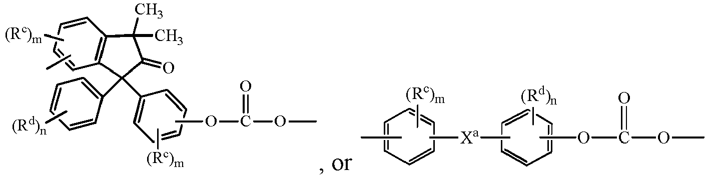 wherein
R^{c} and R^{d} are each independently a C₁₋₁₂ alkyl, C₁₋₁₂ alkenyl, C₃₋₈ cycloalkyl, or C₁₋₁₂ alkoxy;
each R⁶ is independently C₁₋₃ alkyl or phenyl, preferably methyl;
X^{a} is a C₆₋₁₂ polycyclic aryl, C₃₋₁₈ mono- or polycycloalkylene, C₃₋₁₈ mono- or polycycloalkylidene, -(Q¹)ₓ-G-(Q²)_{y}- group wherein Q¹ and Q² are each independently a C₁₋₃ alkylene, G is a C₃₋₁₀ cycloalkylene, x is 0 or 1, and y is 1, or -C(Z¹)(Z²) - wherein Z¹ is C₁₋₁₂ alkyl or C₆₋₁₂ aryl and Z² is C₆₋₁₂ aryl; and
m and n are each independently 0 to 4.

6. The thermoplastic composition of claim 5, wherein the copolycarbonate comprises, based on the total number of carbonate units in the copolycarbonate,
40 to 80 mole percent, preferably 50 to 80 mole percent, more preferably 50 to 70 mole percent of the bisphenol A carbonate units;
10 to 50 mole percent, preferably 20 to 50 mole percent, more preferably 20 to 40 mole percent of the second carbonate units; and
5 to 50 mole percent, preferably 5 to 40 mole percent, more preferably 5 to 30 mole percent of the high heat carbonate units.

7. The thermoplastic composition of any one or more of claims 1 to 6, wherein the copolycarbonate has a glass transition temperature of 150°C or greater, preferably 190°C or greater, more preferably 195°C or greater, as determined by differential scanning calorimetry as per ASTM D3418 with a 20°C/min heating rate.

8. The thermoplastic composition of any one or more of claims 1 to 7, further comprising a polycarbonate homopolymer in an amount of 10 to 90 weight percent based on the total weight of the thermoplastic composition.

9. The thermoplastic composition of any one or more of claims 1 to 8, further comprising a processing aid, a heat stabilizer, an ultraviolet light absorber, a colorant, a flame retardant, an impact modifier, mold release agent, a reinforcing agent, or a combination comprising at least one of the foregoing.

10. The thermoplastic composition of any one or more of claims 1 to 9, wherein the composition further comprises an epoxy-containing polymer, an epoxy-containing oligomer, or a combination thereof, preferably the composition further comprises a styrene-acrylate-epoxy polymer, or an epoxy carboxylate oligomer or polymer, or a combination comprising at least one of the foregoing.

11. An article manufactured from the composition of any one or more of claims 1 to 10, wherein the article is a molded article, a thermoformed article, an extruded film, an extruded sheet, one or more layers of a multi-layer article, a three dimensional printed part, a substrate for a coated article, or a substrate for a metallized article.

12. The article of claim 11, wherein the article is a lens or cover for lighting devices, a lens holder, motor vehicle headlights, automotive rear lights, automotive fog lights, flash lights, cameras, mobile phone cameras; a light guide, a substrate film, a signal indicator, a waveguide element, a reflector, a collimator, a housing for a light source, a lamp bezel, a lamp holder, a lamp cover, a display screen, glazing, a safety goggle, a visor, a medical device, a face shield, an optical fiber, a fuse, a part of a domestic appliance, a housings for a monitor, a housing for a cell phone, an electrical connector, a fire shield, a food tray, a packaging film, an animal cage, a tray, an optical film, a light bulb, or a film laminate.

13. The article of claim 11 or 12, wherein the article has no significant part distortion or discoloration when the article is subjected to a secondary operation comprising over-molding, lead-free soldering, low temperature soldering, or coating, or a combination thereof.

## Patentansprüche

1. Thermoplastische Zusammensetzung, umfassend:
ein Copolycarbonat, das Bisphenol-A-Carbonateinheiten und zweite Carbonateinheiten der Formel (1a) umfasst: 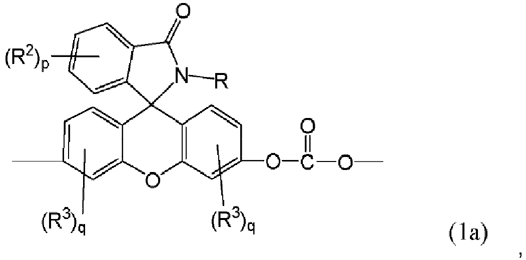 worin
R ein C₁₋₂₅-Hydrocarbyl, vorzugsweise ein C₁₋₆-Alkyl, ein Phenyl, oder ein Phenyl, das mit bis zu fünf C₁₋₆-Alkylgruppen substituiert ist, stärker bevorzugt ein C₁₋₃-Alkyl oder ein Phenyl ist;
jedes Auftreten von R² und R³ unabhängig ein Wasserstoff, ein Halogen oder ein C₁₋₂₅-Hydrocarbyl, vorzugsweise ein Wasserstoff, ein Halogen oder ein C₁₋₆-Alkyl, stärker bevorzugt ein Wasserstoff oder ein C₁₋₃-Alkyl ist; und
p für 0 bis 4, vorzugsweise 0 oder 1, stärker bevorzugt 0 steht; und
jedes q unabhängig für 0 bis 3, vorzugsweise 0 oder 1, stärker bevorzugt 0 steht; und
optional ein Bisphenol-A-Homopolycarbonat.

2. Thermoplastische Zusammensetzung nach Anspruch 1, wobei die zweiten Carbonateinheiten in dem Copolycarbonat die Formel (1b) aufweisen: 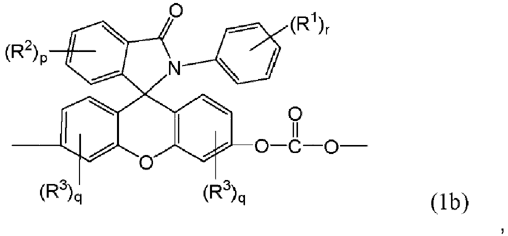 worin
jedes Auftreten von R¹ unabhängig ein Wasserstoff, ein Phenyl oder ein C₁₋₆-Alkyl, vorzugsweise ein Wasserstoff oder ein C₁₋₃-Alkyl ist;
jedes Auftreten von R² und R³ unabhängig ein Wasserstoff, ein Halogen oder ein C₁₋₂₅-Hydrocarbyl, vorzugsweise ein Wasserstoff oder ein C₁₋₆-Alkyl, stärker bevorzugt ein Wasserstoff oder ein C₁₋₃-Alkyl ist; und
p und q jeweils unabhängig für 0 bis 4 , vorzugsweise 0 oder 1, stärker bevorzugt 0 stehen; und
r für 0 bis 5, vorzugsweise 0 oder 1, stärker bevorzugt 0 steht.

3. Thermoplastische Zusammensetzung nach einem der Ansprüche 1 oder 2,
wobei die zweiten Carbonateinheiten in dem Copolycarbonat die Formel (1c) aufweisen:

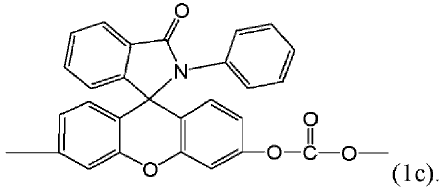

4. Thermoplastische Zusammensetzung nach einem der Ansprüche 1 bis 3,
wobei das Copolycarbonat, bezogen auf die Gesamtzahl der Carbonateinheiten in dem Copolycarbonat, Folgendes umfasst:
5 bis 95 Molprozent, vorzugsweise 25 bis 85 Molprozent, stärker bevorzugt 50 bis 80 Molprozent der Bisphenol-A-Carbonateinheiten; und
5 bis 95 Molprozent, vorzugsweise 15 bis 75 Molprozent, stärker bevorzugt 20 bis 50 Molprozent der zweiten Carbonateinheiten.

5. Thermoplastische Zusammensetzung nach einem der Ansprüche 1 bis 4, wobei das Copolycarbonat des Weiteren eine Hochtemperatur-Carbonateinheit, die von der Bisphenol-A-Carbonateinheit und der zweiten Carbonateinheit verschieden ist, umfasst, wobei die Hochtemperatur-Carbonateinheit eine oder mehrere von: 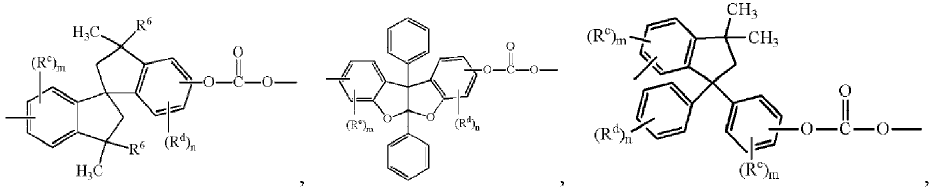 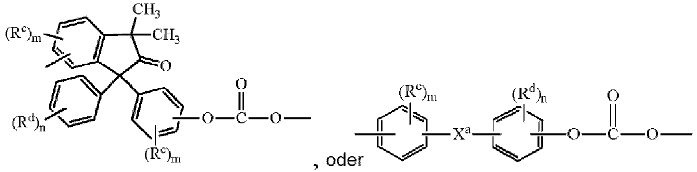 umfasst, worin
R^{c} und R^{d} jeweils unabhängig ein C₁₋₁₂-Alkyl, C₁₋₁₂-Alkenyl, C₃₋₈-Cycloalkyl oder C₁₋₁₂-Alkoxy sind;
jeder R⁶ unabhängig C₁₋₃-Alkyl oder Phenyl, vorzugsweise Methyl ist;
X^{a} für ein polycyclisches C₆₋₁₂-Aryl, für C₃₋₁₈-Mono- oder -Polycycloalkylen, für C₃₋₁₈-Mono- oder -Polycycloalkyliden, für eine -(Q¹)ₓ-G-(Q²)_{y}-Gruppe, worin Q¹ und Q² jeweils unabhängig ein C₁₋₃-Alkylen sind, G ein C₃₋₁₀)-Cycloalkylen ist, x für 0 oder 1 steht und y für 1 steht, oder für -C(Z¹)(Z²)-, worin Z¹ C₁₋₁₂-Alkyl oder C₆₋₁₂-Aryl ist und Z² C₆₋₁₂-Aryl ist, steht; und
m und n jeweils unabhängig für 0 bis 4 stehen.

6. Thermoplastische Zusammensetzung nach Anspruch 5, wobei das Copolycarbonat, bezogen auf die Gesamtzahl der Carbonateinheiten in dem Copolycarbonat, Folgendes umfasst:
40 bis 80 Molprozent, vorzugsweise 50 bis 80 Molprozent, stärker bevorzugt 50 bis 70 Molprozent der Bisphenol-A-Carbonateinheiten;
10 bis 50 Molprozent, vorzugsweise 20 bis 50 Molprozent, stärker bevorzugt 20 bis 40 Molprozent der zweiten Carbonateinheiten;
5 bis 50 Molprozent, vorzugsweise 5 bis 40 Molprozent, stärker bevorzugt 5 bis 30 Molprozent der Hochtemperatur-Carbonateinheiten.

7. Thermoplastische Zusammensetzung nach einem der Ansprüche 1 bis 6, wobei das Copolycarbonat eine Glasübergangstemperatur von 150 °C oder mehr, vorzugsweise von 190 °C oder mehr, stärker bevorzugt 195 °C oder mehr gemäß Bestimmung mittels dynamischer Differenzkalorimetrie, wie mittels ASTM D3418 bei einer Erwärmungsrate von 20 °C/min aufweist.

8. Thermoplastische Zusammensetzung nach einem der Ansprüche 1 bis 7, die des Weiteren ein Polycarbonat-Homopolymer in einer Menge von 10 bis 90 Gewichtsprozent, bezogen auf das Gesamtgewicht der thermoplastischen Zusammensetzung, umfasst.

9. Thermoplastische Zusammensetzung nach einem der Ansprüche 1 bis 8, die des Weiteren ein Verarbeitungshilfsmittel, einen Hitzestabilisator, einen Absorber von ultraviolettem Licht, ein Färbemittel, ein Flammschutzmittel, einen die Schlagzähigkeit modifizierenden Hilfsstoff, ein Formtrennmittel, ein Verstärkungsmittel, oder eine Kombination, die mindestens eines der vorhergehenden (Mittel) umfasst, umfasst.

10. Thermoplastische Zusammensetzung nach einem der Ansprüche 1 bis 9, wobei die Zusammensetzung ferner ein Epoxy-enthaltenes Polymer, ein Epoxy-enthaltenes Oligomer oder eine Kombination hiervon umfasst, wobei die Zusammensetzung vorzugsweise des Weiteren ein Styrol-Acrylat-Epoxy-Polymer oder ein Epoxy-Carboxylat-Oligomer oder -Polymer oder eine Kombination, die mindestens eine der vorhergehenden (Verbindungen) umfasst, umfasst.

11. Artikel, der aus der Zusammensetzung nach einem oder mehreren der Ansprüche 1 bis 10 hergestellt ist, wobei der Artikel ein geformter Artikel, ein warmgeformter Artikel, eine extrudierte Folie, eine extrudierte Lage, eine oder mehrere Schichten eines mehrere Schichten aufweisenden Artikels, ein dreidimensional gedrucktes Teil, ein Substrat für einen beschichteten Artikel oder ein Substrat für einen metallisierten Artikel ist.

12. Artikel nach Anspruch 11, wobei der Artikel eine Linse oder eine Abdeckung für Beleuchtungsvorrichtungen, ein Linsenhalter, Scheinwerfer von Kraftfahrzeugen, Heckleuchten von Kraftfahrzeugen, Nebelscheinwerfer von Kraftfahrzeugen, Blitzlichter, Kameras, Kameras von Mobiltelefonen; ein Lichtleiter, eine Substratfolie, eine Signalanzeige, ein Wellenleiterelement, ein Reflektor, ein Kollimator, ein Gehäuse für eine Lichtquelle, eine Lampenblende, eine Lampenfassung, eine Lampenabdeckung, einen Anzeigebildschirm, Verglasung, eine Schutzbrille, ein Visier, eine medizinische Vorrichtung, ein Gesichtsschild, eine optische Faser, eine Sicherung, ein Teil eines Haushaltsgeräts, ein Gehäuse für einen Monitor, ein Gehäuse für ein Mobiltelefon, ein elektrischer (Steck)verbinder, eine Feuerabschirmung, eine Nahrungsmittelschale, eine Verpackungsfolie, ein Tierkäfig, ein Tablett, ein optischer Film, eine Glühbirne oder ein Folienlaminat ist.

13. Artikel nach Anspruch 11 oder Anspruch 12, wobei der Artikel keine signifikante Verzerrung oder Verfärbung der Teile aufweist, wenn der Artikel einem zweiten Vorgang, der ein Überformen, ein bleifreies Löten, ein Niedertemperaturlöten oder ein Beschichten oder eine Kombination hiervon umfasst, unterzogen wird.

## Revendications

1. Composition thermoplastique comprenant :
un copolycarbonate comprenant des unités de carbonate de bisphénol A et des unités d'un second carbonate de formule (1a) 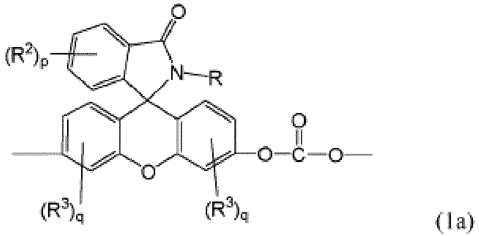 où
R est un hydrocarbyle en C₁₋₂₅, de préférence un alkyle en C₁₋₆, un phényle, ou un phényle substitué par jusqu'à cinq groupes alkyle en C₁₋₆, plus préférablement un alkyle en C₁₋₃ ou un phényle ;
chaque occurrence de R² et R³ est de façon indépendante un hydrogène, un halogène, ou un hydrocarbyle en C₁₋₂₅, de préférence un hydrogène, un halogène, ou un alkyle en C₁₋₆, plus préférablement un hydrogène ou un alkyle en C₁₋₃ ; et
p vaut entre 0 et 4, de préférence 0 ou 1, plus préférablement 0 ; et
chaque q vaut de façon indépendante entre 0 et 3, de préférence 0 ou 1, plus préférablement 0 ; et
éventuellement un homopolycarbonate de bisphénol A.

2. Composition thermoplastique selon la revendication 1, dans laquelle les unités de second carbonate dans le copolycarbonate sont de formule (1b) 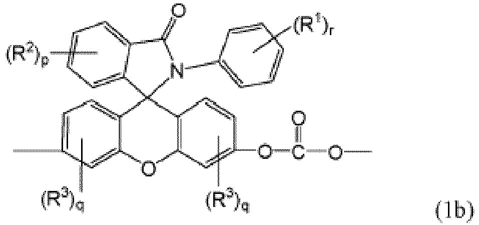 où
chaque occurrence de R¹ est de façon indépendante un hydrogène, un phényle, ou un alkyle en C₁₋₆, de préférence un hydrogène ou un alkyle en C₁₋₃ ;
chaque occurrence de R² et R³ est de façon indépendante un hydrogène, un halogène, ou un hydrocarbyle en C₁₋₂₅, de préférence un hydrogène ou un alkyle en C₁₋₆, plus préférablement un hydrogène ou un alkyle en C₁₋₃ ; et
p et q valent chacun de façon indépendante entre 0 et 4, de préférence 0 ou 1, plus préférablement 0 ; et
r vaut entre 0 et 5, de préférence 0 ou 1, plus préférablement 0.

3. Composition thermoplastique selon la revendication 1 ou 2, dans laquelle les unités de second carbonate dans le copolycarbonate sont de formule (1c).

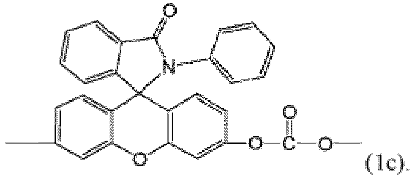

4. Composition thermoplastique selon l'une ou plusieurs des revendications 1 à 3, dans laquelle le copolycarbonate comprend, sur la base du nombre total d'unités de carbonates dans le copolycarbonate,
5 à 95 % en moles, de préférence 25 à 85 % en moles, plus préférablement 50 à 80 % en moles des unités de carbonate de bisphénol A ; et
5 à 95 % en moles, de préférence 15 à 75 % en moles, plus préférablement 20 à 50 % en moles des unités de second carbonate.

5. Composition thermoplastique selon l'une ou plusieurs des revendications 1 à 4, dans laquelle le copolycarbonate comprend en outre une unité de carbonate à haute température différente de l'unité de carbonate de bisphénol A et de l'unité de second carbonate, l'unité de carbonate à haute température comprenant un ou plusieurs des éléments suivants 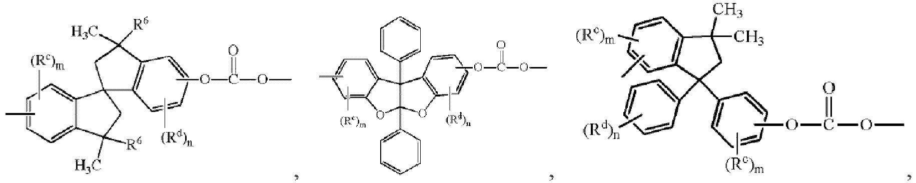 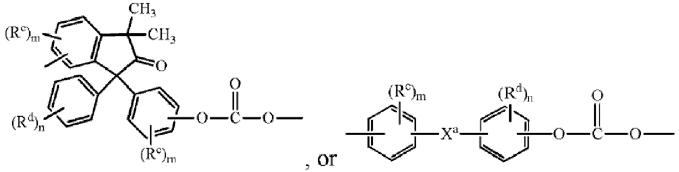 où
R^{c} et R^{d} sont chacun de façon indépendante un alkyle en C₁₋₁₂, un alcényle en C₁₋₁₂, un cycloalkyle en C₃₋₈ ou un alcoxy en C₁₋₁₂ ;
chaque R⁶ est de façon indépendante un alkyle en C₁₋₃ ou un phényle, de préférence un méthyle ;
x^{a} est un groupe aryle polycyclique en C₆₋₁₂, un groupe mono- ou polycycloalkylène en C₃₋₁₈, un groupe mono- ou polycycloalkylidène en C₃₋₁₈, un groupe -(Q¹)ₓ-G-(Q²)_{y}- où Q¹ et Q² sont chacun de façon indépendante un alkylène en C₁₋₃, G est un cycloalkylène en C₃₋₁₀, x vaut 0 ou 1, et y vaut 1, ou -C(Z¹)(Z²)- où Z¹ est un alkyle en C₁₋₁₂ ou un aryle en C₆₋₁₂ et Z² est un aryle en C₆₋₁₂ ; et
m et n valent chacun de façon indépendante entre 0 et 4.

6. Composition thermoplastique selon la revendication 5, dans laquelle le copolycarbonate comprend, sur la base du nombre total d'unités de carbonates dans le copolycarbonate,
40 à 80 % en moles, de préférence 50 à 80 % en moles, plus préférablement 50 à 70 % en moles d'unités de carbonate de bisphénol A ;
10 à 50 % en moles, de préférence 20 à 50 % en moles, plus préférablement 20 à 40 % en moles des unités de second carbonate ; et
5 à 50 % en moles, de préférence 5 à 40 % en moles, plus préférablement 5 à 30 % en moles d'unités de carbonate à haute température.

7. Composition thermoplastique selon l'une ou plusieurs des revendications 1 à 6, dans laquelle le copolycarbonate a une température de transition vitreuse de 150 °C ou plus, de préférence de 190 °C ou plus, plus préférablement de 195 °C ou plus, telle que déterminée par calorimétrie différentielle à balayage selon la norme ASTM D3418 avec une vitesse de chauffage de 20 °C/min.

8. Composition thermoplastique selon l'une ou plusieurs des revendications 1 à 7, comprenant en outre un homopolymère de polycarbonate en une quantité de 10 à 90 % en poids par rapport au poids total de la composition thermoplastique.

9. Composition thermoplastique selon l'une ou plusieurs des revendications 1 à 8, comprenant en outre un adjuvant, un stabilisant thermique, un absorbeur de lumière ultraviolette, un colorant, un retardateur de flamme, un modificateur de la résistance au choc, un agent de démoulage, un agent de renforcement, ou une combinaison comprenant au moins l'un des éléments précédents.

10. Composition thermoplastique selon l'une ou plusieurs des revendications 1 à 9, dans laquelle la composition comprend en outre un polymère contenant un époxy, un oligomère contenant un époxy, ou une combinaison de ceux-ci, de préférence la composition comprend en outre un polymère styrène-acrylate-époxy, ou un oligomère ou un polymère époxy-carboxylate, ou une combinaison comprenant au moins un des éléments précédents.

11. Objet fabriqué à partir de la composition selon l'une ou plusieurs des revendications 1 à 10, l'objet étant un objet moulé, un objet thermoformé, un film extrudé, une feuille extrudée, une ou plusieurs couches d'un objet multicouche, une pièce imprimée tridimensionnelle, un substrat pour un objet enrobé, ou un substrat pour un objet métallisé.

12. Objet selon la revendication 11, l'objet étant une lentille ou un couvercle pour des dispositifs d'éclairage, un porte-lentille, des phares de véhicules automobiles, des feux arrière de véhicules automobiles, des phares antibrouillard de véhicules automobiles, des lampes flash, des appareils photo, des appareils photo de téléphones mobiles ; un guide optique, un film substrat, un indicateur de signal, un élément à guide d'ondes, un réflecteur, un collimateur, un boîtier pour une source de lumière, un cerclage de phare, un support de lampe, un couvercle pour lampe, un écran d'affichage, un vitrage, des lunettes de protection, une visière, un dispositif médical, un écran facial, une fibre optique, un fusible, une partie d'un appareil ménager, un boîtier pour un écran, un boîtier pour un téléphone portable, un connecteur électrique, un pare-feu, un plateau pour aliments, un film d'emballage, une cage pour animaux, un plateau, un film optique, une ampoule ou un film laminé.

13. Objet selon la revendication 11 ou 12, l'objet ne présentant aucune déformation partielle ou décoloration significative lorsqu'il est soumis à une opération secondaire comprenant le surmoulage, la soudure sans plomb, la soudure à basse température ou l'enduction, ou une combinaison de ces opérations.
